# EUROPEAN PATENT APPLICATION

(11) **EP 0 977 413 A2**
(43) Date of publication of application: **02.02.2000**
(21) Application number: 99114688.7
(22) Date of filing: 27.07.1999
(51) Int. Cl.: H04M 1/00, H04N 1/00

(54) **Telephone and data transmission method**

(30) Priority: 27.07.1998 JP 21152798
(71) Applicant: SONY CORPORATION, Tokyo (JP)
(72) Inventor: Noguchi, Fujio, Shinagawa-ku, Tokyo (JP); Haraguchi, Yuji, Shinagawa-ku, Tokyo (JP)
(74) Representative: Körber, Wolfhart, Dr.

(57) **Abstract**

The present invention relates to a telephone (4, 5) which comprises: an IC-card holding means (48A, 48B) for holding an IC card (3, 6) in such a way that the IC card (3, 6) can be mounted and dismounted with a high degree of freedom; an audio communication means (41) for inputting and outputting an audio signal to allow an audio communication with a communication partner; and a data transmission means for transmitting data recorded on the IC card (3, 6) to the communication partner concurrently with and at the same time as the audio communication carried out by the audio communication means (41).

## Description

### BACKGROUND OF THE INVENTION

In general, the present invention relates to a telephone and a data transmission method. In particular, the present invention can be applied to a telephone for transmitting contents of an IC card which are obtained as a result of a recording operation by using typically an electronic still camera. According to the present invention, by transmitting contents of an IC card concurrently with and at the same time with an audio communication, information such as a still picture can be transmitted with ease.

Traditionally, by using an electronic still camera in conjunction with a personal computer, various kinds of processing can be carried out.

An electronic still camera is designed as a portable apparatus for taking a variety of still pictures in an image-pickup operation. Results of the image-pickup operation are subjected to data compression before being recorded into typically a floppy disc. A personal computer displays the image-pickup results recorded on the floppy disc on a display unit. In addition, in accordance with operations carried out by the user, the personal computer transmits the image-pickup results to a remote location so that the results can be viewed at the remote location.

By the way, more convenience can be provided to the user if a variety of image-pickup results can be transmitted with ease without the need to carry out operations on a personal computer or the like.

### SUMMARY OF THE INVENTION

It is thus an object of the present invention addressing the problem described above to provide a telephone and a data transmission method that are capable of transmitting a variety of image-pickup results with ease.

In order to solve the problem described above, the present invention provides a telephone which comprises: an IC-card holding means for holding an IC card in such a way that the IC card can be mounted and dismounted with a high degree of freedom; an audio communication means for inputting and outputting an audio signal to allow an audio communication with a communication partner; and a data transmission means for transmitting data recorded on the IC card to the communication partner concurrently with and at the same time as the audio communication carried out by the audio communication means.

In addition, the present invention also provides a telephone which comprises: an IC-card holding means for holding an IC card in such a way that the IC card can be mounted and dismounted with a high degree of freedom; an audio communication means for inputting and outputting an audio signal to allow an audio communication with a communication partner; and a data processing means for recording data received from the communication partner onto the IC card concurrently with and at the same time as the audio communication carried out by the audio communication means.

Moreover, the present invention also provides a data transmission method for transmitting data recorded on an IC card held in such a way that the IC card can be mounted and dismounted with a high degree of freedom to a communication partner while exchanging an audio signal with the communication partner.

Furthermore, the present invention also provides a data transmission method for recording data received from a communication partner onto an IC card held in such a way that the IC card can be mounted and dismounted with a high degree of freedom while exchanging an audio signal with the communication partner.

### BRIEF DESCRIPTION OF THE DRAWINGS

Fig. 1 is a diagram showing the entire configuration of a still picture transmission system in a plain and simple manner;
Fig. 2 is a diagram showing a top view of an electronic still camera employed in the still picture system shown in Fig. 1;
Fig. 3 is a block diagram showing the electronic still camera shown in Fig. 2;
Fig. 4 is a diagram showing the format of an IC card used in the still picture system shown in Fig. 1 in a simple plain manner;
Fig. 5 is a diagram showing a top view of a telephone employed in the still picture system shown in Fig. 1;
Fig. 6 is a block diagram showing the telephone shown in Fig. 5;
Fig. 7 shows a flowchart representing a processing procedure of a controller employed in the telephone as implemented by an embodiment of the present invention to transmit data to a communication partner;
Fig. 8 shows a continuation of the flowchart shown in Fig. 7;
Fig. 9 shows a flowchart representing a processing procedure of the controller to receive data from a communication partner;
Fig. 10 shows a continuation of the flowchart shown in Fig. 9;
Fig. 11 shows a top view of a remote commander employed in the still picture system shown in Fig. 1; and
Fig. 12 is a block diagram showing the remote commander shown in Fig. 11.

### DETAILED DESCRIPTION OF THE PREFERRED EMBODIMENTS

A preferred embodiment of the present invention is explained in detail by properly referring to accompanying diagrams.

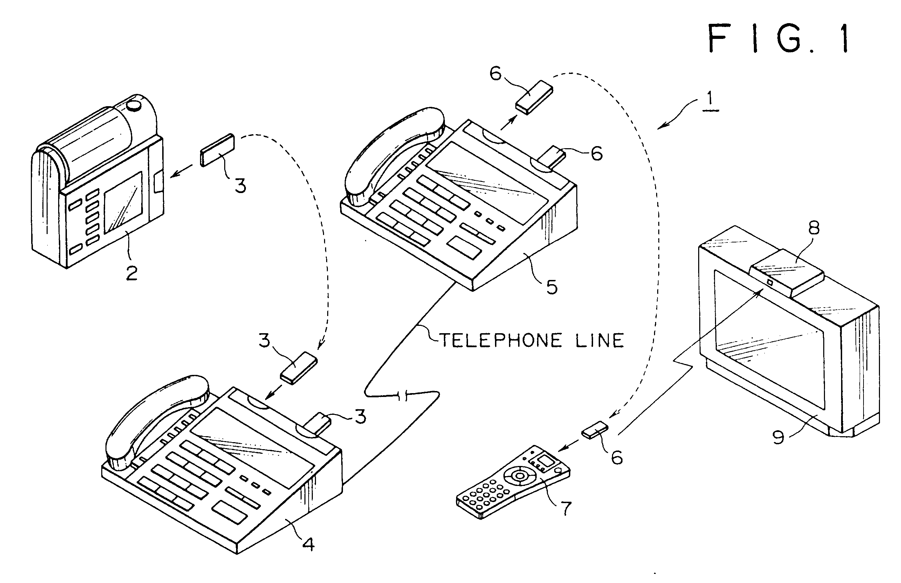

Fig. 1 is a diagram showing the entire configuration of a still picture transmission system implemented by the embodiment of the present invention in a plain and simple manner. The still picture transmission system 1 records a still picture obtained by typically an electronic still camera 2 onto an IC card 3. In addition, in accordance with a predetermined operation carried out by the user, the still picture transmission system 1 transmits what is recorded on an IC card 3 mounted on a telephone 4 to a telephone 5 serving as a communication partner by way of a telephone line. The telephone 5 records the still picture onto an IC card 6 mounted thereon. When the IC card 6 is removed from the telephone 5 and mounted onto a remote commander 7, and then a predetermined operation is carried out on the remote commander 7, the still picture recorded on the IC card 6 is transmitted to a receiving apparatus 8 which then displays the still picture on the television receiver 9.

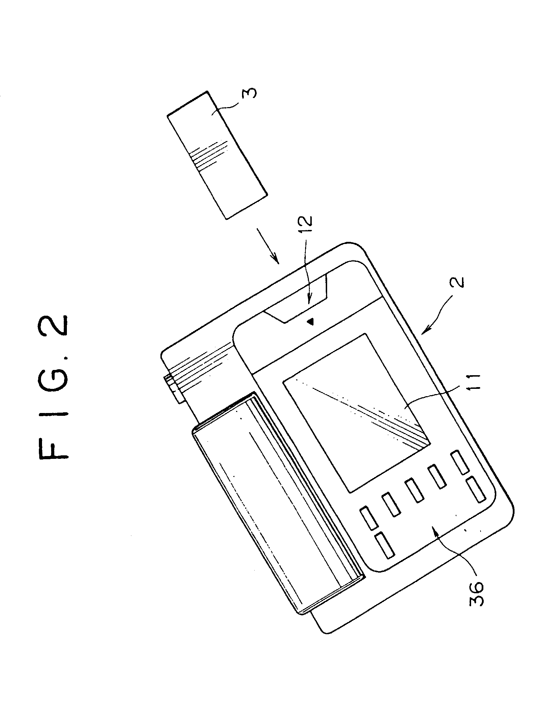

Fig. 2 is a diagram showing a top view of the electronic still camera 2 seen from the rear-surface side. The electronic still camera 2 takes a picture of a desired image-pickup object through a lens placed on the front-surface side and records an image-pickup result on the IC card 3 in accordance with an operation carried out by the user on an operator. The electronic steel camera 2 has a liquid-crystal display panel 11 protruding on the rear-surface side. A slot 12 for mounting the IC card 3 is formed beside the liquid-crystal display panel 11. When the IC card 3 is inserted into the slot 12 of the electronic still camera 2, the IC card 3 is placed on the lower side of the liquid-crystal display panel 11. In close proximity to the slot 12 of the electronic still camera 2, a symbol with a triangular shape is provided to serve as a guide for mounting the IC card 3.

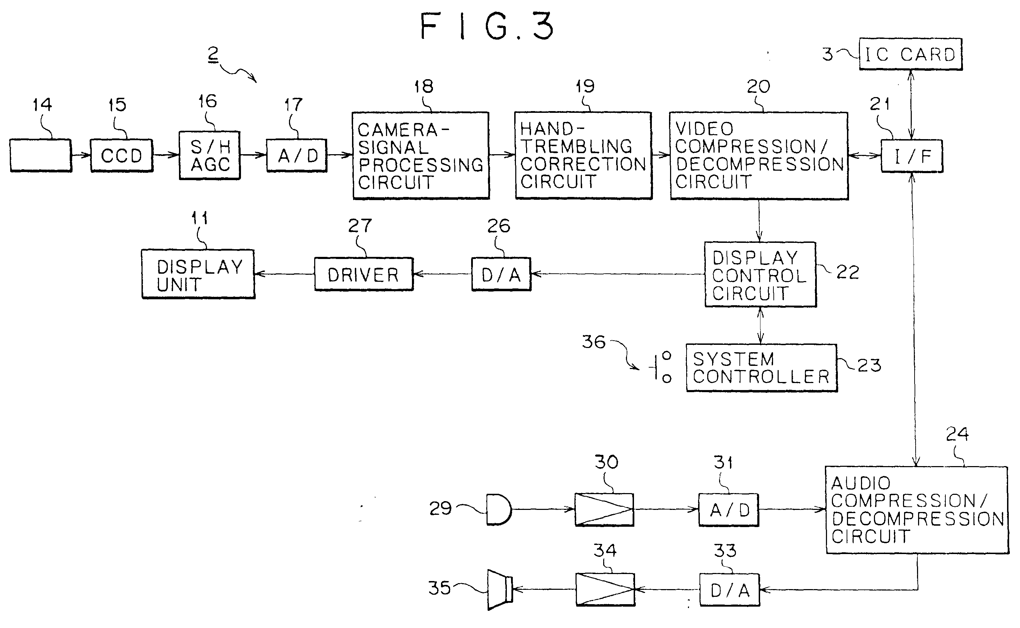

Fig. 3 is a block diagram showing the configuration of the electronic still camera 2. The electronic still camera 2 records a still picture of a desired image-pickup object on the IC card 3, or plays back and displays a still picture recorded on the IC card 3. While the electronic still camera 2 is taking a still picture, the camera 2 also acquires sound generated by the object for a period of time set by the user. The sound is also recorded on the IC card 3 along with the still picture.

To put it in detail, in the electronic still camera 2, a camera lens 14 creates an optical image of the image-pickup object on a photo sensitive surface of a CCD solid image-pickup device 15. The CCD solid image-pickup device 15 outputs an image-pickup result of the optical image formed on the photo sensitive surface. A sample/hold (S/H) AGC circuit 16 carries out correlation double sampling on the image-pickup result prior to correction of the level of the signal to generate and output red, blue and green color signals.

An analog/digital (A/D) conversion circuit 17 converts the red, blue and green color signals into red, blue and green digital color signals, outputting the digital signals to a camera-signal processing circuit 18. In the camera-signal processing circuit 18, the digital color signals are subjected to a variety of corrections such as a gamma correction and a knee correction as well as a matrix processing to generate digital luminance and color-difference signals. A hand-trembling correction circuit 19 carries out a hand-trembling correction and electronic zoom processing on the digital luminance and color-difference signals received from the camera-signal processing circuit 18, outputting luminance and color-difference signals to a video compression/decompression circuit 20.

The video compression/decompression circuit 20 outputs luminance and color-difference signals received from the hand-trembling correction circuit 19 to a display control circuit 22 except during a playback operation. In addition, in accordance with an operation carried out by the user, the video compression/decompression circuit 20 carries out data compression on the luminance and color-difference signals received from the hand-trembling correction circuit 19 and outputs video data D1 obtained as a result of the compression to an interface (I/F) 21. In a playback operation, on the contrary, the video compression/decompression circuit 20 decompresses video data received from the interface (I/F) 21 and outputs the decompressed video data to a system controller 23. It should be noted that the video compression/decompression circuit 20 compresses luminance and color-difference signals typically in accordance with a JPEG (Joint Photographic Coding Experts Group) system.

Controlled by the system controller 23, the interface 21 records the video data output by the video compression/decompression unit 20 onto the IC card 3, or reads out video data from the IC card 3, outputting the video data to video compression/decompression circuit 20. In addition, the interface 21 records audio data received from an audio compression/decompression circuit 24 into the IC card 3 or reads out audio data from the IC card 3, outputting the audio data to the audio compression/decompression circuit 24 to accompany operations to record or read out video data into and from the IC card 3 respectively. In these operations, the interface 21 records video and audio data into the IC card 3 in a format to be described later.

The display control circuit 22 superimposes information on operations carried out by the electronic still camera 2 on the luminance and color-difference signals output by the video compression/decompression circuit 20 by communication of data with the system controller 23.

A digital/analog (D/A) conversion circuit 26 converts the digital luminance and color-difference signals output by the display control circuit 22 into analog luminance and color-difference signals, outputting the signals to a driver 27. The driver 27 drives a liquid-crystal display panel 11 in accordance with the analog luminance and color-difference signals. In this way, the electronic still camera 2 allows the user to verify an image-pickup result or a playback result through the liquid-crystal display panel 11. That is to say, the user is capable of visually verifying information on whole operations.

A microphone 29 collects sound generated by the object, outputting an audio signal to an amplifier circuit 30. The amplifier circuit 30 amplifies the audio signal received from the microphone 29 at a predetermined gain, outputting an amplified signal to an analog/digital (A/D) conversion circuit 31. The A/D conversion circuit 31 converts the analog signal received from the amplifier circuit 30 into a digital signal, outputting the digital signal to an audio compression/decompression circuit 24. In a recording operation, the digital signal is compressed by the audio compression/decompression circuit 24 before being supplied to the interface 21 as audio data to be recorded. In a playback operation, on the other hand, the audio compression/decompression circuit 24 decompresses audio data received from the interface 21. It should be noted that the audio compression/decompression circuit 24 adopts an ATRAC (Adaptive Transform Acoustic Coding) technique to carry out a band-division process on the audio signal before spectrum conversion and data compression.

A digital/analog (D/A) conversion circuit 33 converts the digital data received from the audio compression/decompression circuit 24 into an analog signal, outputting the analog signal to an amplifier circuit 34. The amplifier circuit 34 amplifies the analog signal received from the D/A conversion circuit 33, outputting an amplified signal to a speaker 35. Accordingly, the electronic still camera 2 records the sound along with the image-pickup result and allows the user to listen to the recorded sound on a trial basis.

The system controller 23 is implemented by a microcomputer for controlling all processing performed by the electronic still camera 2 in accordance with an operation carried out on the operator 36 provided on the rear surface of the electronic still camera 2. Also the system controller 23 outputs the information on operations to the display control circuit 22.

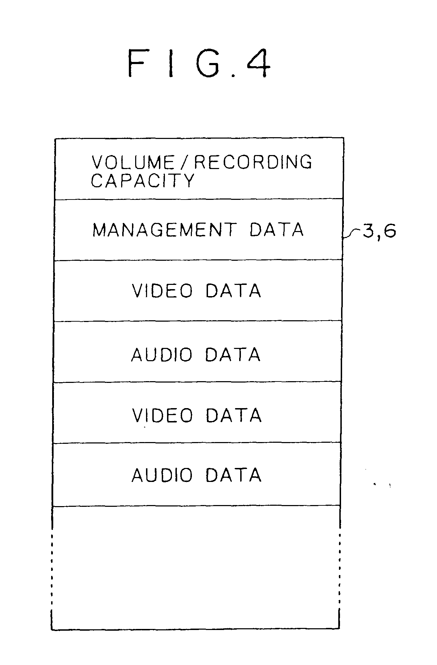

Fig. 4 is a diagram showing the memory space of the IC cards 3 and 6 in a simple plain manner. Starting from the beginning of the memory space of the IC card 3 or 6, the volume or the total recording capacity of the IC card, management data and video and audio data files are recorded sequentially. The management data is used for controlling files of video data and files of audio data associated with the video data. To put it concretely, the management data includes the address, the image-pickup time and date, the image-pickup location and the type of each file as well as the size of the remaining area. The type of a file is information such as whether the file contains audio, video or text data and a compression format.

Thus, still pictures and sounds recorded at the same location on the IC card 3 or 6 can be read out selectively on the basis of the management data. In addition, the use of the management data allows data other than the video or audio data to be recorded and the recorded data to be read out.

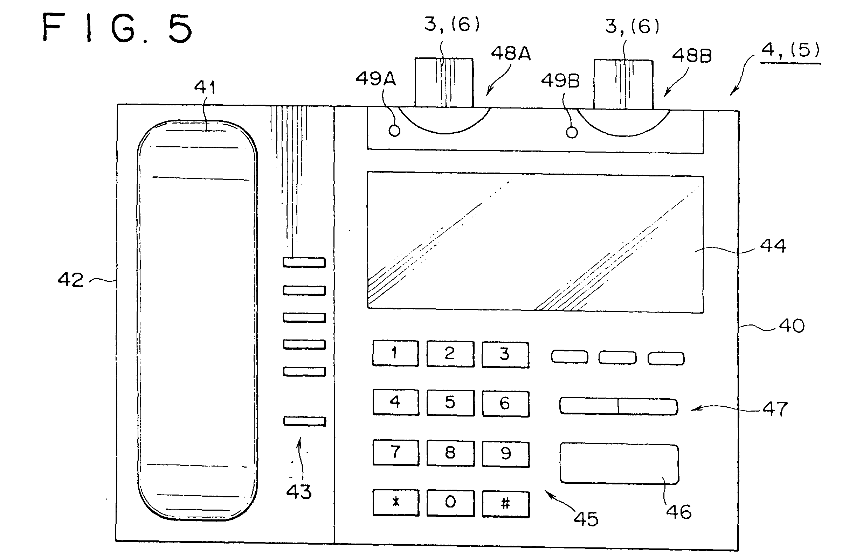

Fig. 5 is a diagram showing a top view of an operation surface of the telephone 4 or 5. The telephone 4 or 5 has an almost square main body 40. On one side of the main box 40, a mounting base 42 is provided. A hand set 41 is mounted on the mounting base 42. A variety of operators 43 such as a hold key are also provided on the mounting base 42 on a side close to the main body 40.

A liquid-crystal display panel 44 is provided on the main body 40. A cataloged communication partner is selected through the liquid-crystal display panel 44. A variety of messages are also displayed to the user on the liquid-crystal display panel 44. Also provided on the main body 40 beneath the liquid-crystal display panel 44 are numeric keys required to dial a telephone number, an asterisk key, a sharp operator 45, an execution operator 46 and a variety of function keys 47. It should be noted that the function keys 47 include an operator for notifying a communication partner of contents of an IC card 3 plugged into a slot 48A or 48B.

The two slots 48A and 48B are provided above the liquid-crystal display panel 44. The IC card 3 or 6 can be plugged into the slot 48A or 48B. Light emitting diodes 49A and 49B are provided at the bottoms of the slots 48A and 48B respectively. The light emitting diodes 49A or 49B is turned on to indicate that the IC card 3 or 6 is mounted correctly on the slot 48A or 48B respectively of the telephone 4 or 5. The light emitting diode 49A or 49B is blinking when data recorded on the IC card 3 or 6 is being transmitted.

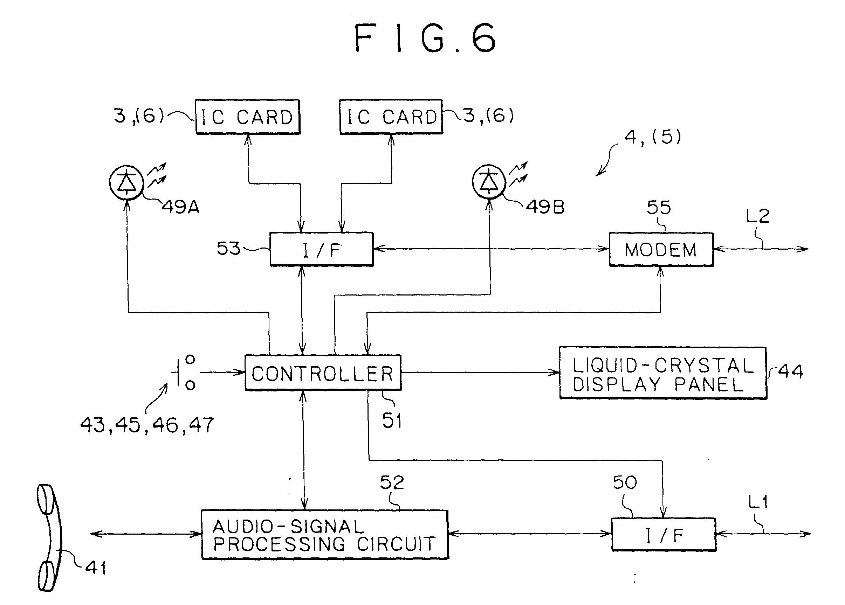

Fig. 6 is a block diagram showing the configuration of the telephone 4 or 5. Since the telephones 4 and 5 have the same configuration, only the configuration of the telephone 4 is explained. The explanation of the configuration of the telephone 5 is omitted. The telephone 4 here is connected to two lines, namely, telephone lines L1 and L2.

In the telephone 4, an interface (I/F) 50 carries out processing of line connection with a communication partner through the telephone line L1 under control executed by a controller 51. When a call arrives by way of the telephone line L1, on the contrary, the interface 50 informs the controller 51 of the arrival. Controlled by the controller 51 according to the operations by the user, the interface 50 further issues a response to the incoming call and carries out processing to connect the line.

With the line connected as such, the interface 50 passes on an audio signal received from the communication partner by way of the telephone line L1 to an audio-signal processing circuit 52, and outputs an audio signal received from the audio-signal processing circuit 52 to the telephone line L1. Controlled by the controller 51, the interface 50 also carries out processing to cut off the line connection with the communication partner when the conversation is ended.

The audio-signal processing circuit 52 amplifies the audio signal received from the interface 50, outputting the amplified signal to a hand set 41 and amplifies an audio signal received from the hand set 41, outputting the amplified signal to the interface 50. In this way, the telephone 4 allows the hand set 41 to be used for having a conversation with a desired communication partner through a communication line.

Controlled by the controller 51, an interface (I/F) 53 supplies a volume, an overall recording capacity and management data read out from the IC card 3 through a connector not shown in the figure to the controller 51. Also controlled by the controller 51, the interface 53 supplies files of video and audio data read out from the IC card 3 to a modem 55, and records files received from the modem 55 into the IC card 3. In addition, when the interface 53 records a file into the IC card 3, the interface 53 updates the management data of the IC card 3 with management data output by the controller 51.

Prior to this series of operations, the interface 53 monitors a terminal voltage of the connector to determine whether or not the IC card 3 has been mounted or dismounted on the basis of a variation in terminal voltage. When the interface 53 detects a change in terminal voltage indicating that the IC card 3 has just been mounted, the interface 53 makes an access to the IC card 3 to determine whether or not the IC card 3 has been mounted correctly. If the IC card 3 has been mounted correctly, the controller 51 is informed of the fact that the IC card 3 has been mounted correctly. By the same token, the interface 53 determines whether or not the IC card 3 has been dismounted. If the IC card 3 has been dismounted, the controller 51 is informed of the fact that the IC card 3 has been dismounted.

The modem 55 carries out processing to establish a line connection with a communication partner through the telephone line L2 under control executed by the controller 51. When a call arrives through the telephone line L2, on the contrary, the modem 55 informs the controller 51 of the arrival. Then, the modem 55 carries out processing to establish a line connection by issuing a response to the call under control executed by the controller 51 in response to the incoming call.

With a line connection with a communication partner established through the telephone line L2 as such, the modem 55 modulates various kinds of data output by the controller 51 and outputs the modulated data to the telephone line L2. On the contrary, various kinds of data received from the telephone line L2 following an incoming call are demodulated before being output to the controller 51.

In addition, controlled by the controller 51, the modem 55 modulates various kinds of data received from the interface 53 and outputs the modulated data to the telephone line L2 and, on the contrary, demodulates various kinds of data received from the telephone line L2 and outputs the demodulated data to the interface 53.

Thus, the telephone 4 allows a variety of files recorded on the IC card 3 to be transmitted to a communication partner by way of the telephone line L2 and a variety of files received from a communication partner to be recorded onto the IC card 3. In addition, prior to such an exchange of files, the telephone 4 and the telephone 5 of the communication partner are capable of mutually informing the size of a free area on the IC card 3, the amount of data in a file to be transferred and so on.

The controller 51 is implemented by a microcomputer for controlling the operation of the telephone 4. When the operators 45 such as the numeric keys are operated after the hand set 41 has been hooked off, the controller 51 transmits a call to a communication partner specified by the operations carried out on the operators 45 by way of the interface 50 and the telephone line L1. When the execution operator 46 is operated after the hand set 41 has been hooked off, the controller 51 displays cataloged communication partners on the liquid-crystal display panel 44, allowing the user to specify one of the displayed communication partners and similarly transmits a call to the specified communication partner. The controller 51 then carries out a sequence of operations in accordance with a response which is transmitted by the communication partner and received through the interface 50. In this way, the controller 51 performs processing to establish a line communication with the communication partner.

With the line communication established as such, the controller 51 activates the audio-signal processing circuit 52, allowing a conversation with the communication partner. It should be noted that the controller 51 also carries out processing for an operation which is carried out on the operator 43 such as the hold key after the line communication has been established.

In addition, if the interface 53 informs that the IC card 3 is seated correctly on the slot 48A or 48B, the controller 51 turns on the corresponding light emitting diode 49A or 49B respectively. The controller 51 then loads indexes, a total size and management data from the IC card 3 into a memory.

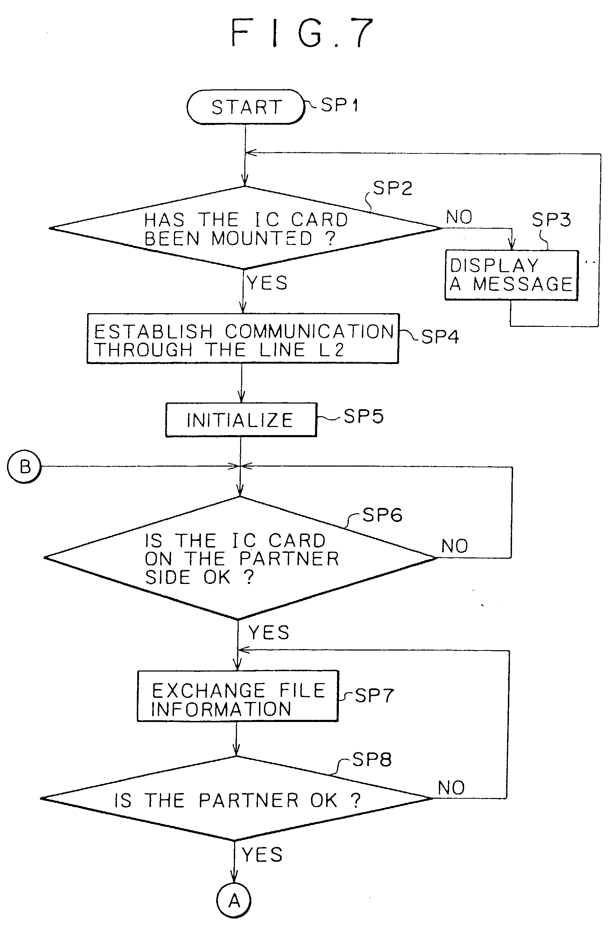

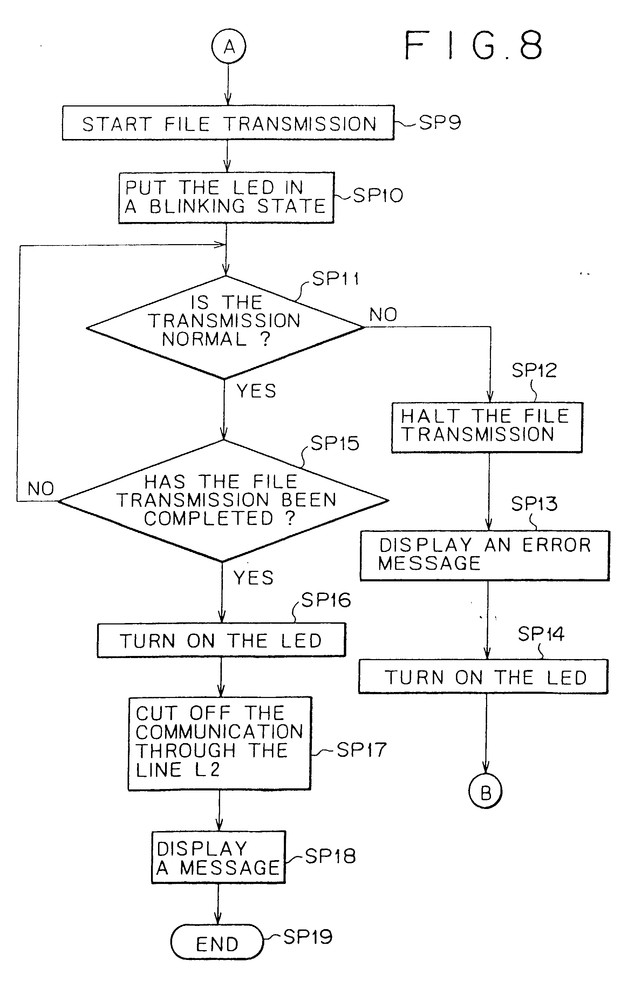

When the function key 47 to transmit the contents of the IC card 3 to a communication partner is operated after the communication through the telephone line L1 has been established, the controller 51 carries out processing in accordance with a procedure shown in Figs. 7 and 8. As shown in the figures, the procedure begins with a step SP1 followed by a step SP2 at which the controller 51 makes a judgment as to whether the IC card 3 has been seated on the slot 48A or 48B in response to the operation carried out on the function key 47. If the outcome of the judgment indicates that the IC card 3 has not been mounted yet, the flow of the procedure continues to a step SP3 at which the controller 51 displays a message stating that the IC card 3 has not been mounted yet on the liquid-crystal display panel 44. Then, the flow of the procedure goes back to the step SP2.

If the outcome of the judgment indicates that the IC card 3 has been mounted, on the other hand, the flow of the procedure continues from the step SP2 to a step SP4. At the step SP4, the controller 51 controls the modem 55 to newly connect the telephone line L2 to the communication partner with which a communication is already under way.

The flow of the procedure then goes on to a step SP5 at which the controller 51 sets parameters such as a transmission speed determined from data exchanged with the telephone of the communication partner in a modem 55 in processing known as initialization. Then, the flow of the procedure goes on to a step SP6 at which the controller 51 makes a judgment as to whether an IC card 6 has been prepared on the telephone of the communication partner. The formation of the judgment is based on the data exchanged with the telephone of the communication partner. If the outcome of the judgment indicates that the IC card 6 has not been mounted yet, the controller 51 repeats the processing of the step SP6.

If the outcome of the judgment indicates that the IC card 6 has been mounted, on the other hand, the flow of the procedure continues from the step SP6 to a step SP7. It should be noted that, if the IC card 3 is mounted at a point of time during the processing of the step SP6, the controller 51 turns on the light emitting diode 49A or 49B and then loads indexes, a total size and management data from the IC card 3 into a memory as is the case in which the IC card 3 was mounted beforehand. At the step SP7, the controller 51 exchanges information on a file to be exchanged with the communication partner. To be more specific, the controller 51 transmits the amount of data stored in a file to be transmitted to the communication partner and receives the size of a free area left in the IC card 6 from the telephone of the communication partner.

The flow of the procedure then goes on to a step SP8 at which the controller 51 compares the amount of data stored in a file to be transmitted with the size of a free area received from the communication partner to make a judgment as to whether or not contents of the IC card 3 to be transmitted can be accommodated in the IC card 6 of the communication partner. In this way, the controller 51 is capable of determining whether preparation for file reception has been completed on the communication-partner side. If the preparation for file reception has not been completed yet on the communication-partner side, the flow of the procedure goes back to the step SP7 after a predetermined period of time has lapsed.

If the outcome of the judgment made at the step SP8 indicates that the preparation for file reception has been completed on the communication-partner side, on the other hand, the flow of the procedure goes on to the step SP9 at which the controller 51 requests the interface 53 and the modem 55 to start transmission of video and audio data. In this way, the transmission of a file recorded on the IC card 3 to the communication partner is started. Then, the flow of the procedure goes on to the step SP10. At the step SP10, the controller 51 puts the light emitting diode 49A or 49B associated with the slot 48A or 48B on which the IC card 3 is plugged in a blinking state from a turned-on state to show the user that the transmission of data is under way.

The flow of the procedure then goes on to a step SP11 at which the controller 51 makes a judgment as to whether or not the file has been transmitted normally. For example, when a status error is received from the communication partner wherein an abnormality has occurred because the IC card 6 was pulled out from the telephone, or when the IC card 3 is removed from this telephone 4, the telephone line L2 is regarded to be in a cut-off state. In this case, the outcome of the judgment is a negation causing the flow of the procedure to go to a step SP12 at which the controller 51 halts the transmission of the file.

Then, the flow of the procedure proceeds to a step SP13 at which the controller 51 displays an error message stating that the file was not correctly transmitted on the liquid-crystal display panel 44. The flow of the procedure then continues to a step SP14 at which the controller 51 changes the state of the light emitting diode 49A or 49B from blinking to turned-on. Then, the flow of the procedure goes back to the step SP6 at which the controller 51 waits for the abnormality to be fixed. At that time, the controller 51 can complete the sequence of operations in accordance with an operation carried out by the user if necessary. In this way, the transmission of the file can be halted in the event of an abnormality if desired by the user.

If the outcome of the judgment made at the step SP11 is an acknowledgment indicating that the file has been transmitted normally, on the other hand, the flow of the procedure goes on to a step SP15 at which the controller 51 makes a judgment as to whether or not the transmission of the file has been completed. If the transmission of the file has not been completed yet, the flow of the procedure goes back to a step SP11. In this way, the controller 51 carries out the pieces of processing of the steps SP11 - SP15 - SP11 repeatedly till the transmission of the file is completed. As the transmission is finished, the flow of the procedure proceeds from the step SP15 to a step SP16.

At the step S16, the controller 51 changes the state of the light emitting diode 49A or 49B from blinking to turned-on. The flow of the procedure then continues to a step SP17 at which the telephone line L2 is cut off. The flow of the procedure then continues to a step SP18 at which at which the controller 51 displays a message stating that the file has been correctly transmitted on the liquid-crystal display panel 44. Finally, the flow of the procedure continues to a step SP19 at which the processing is ended.

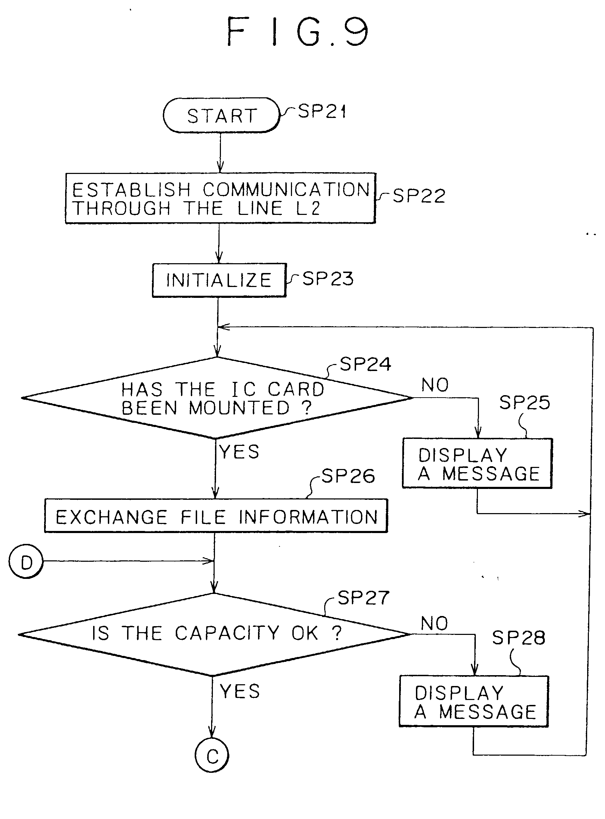

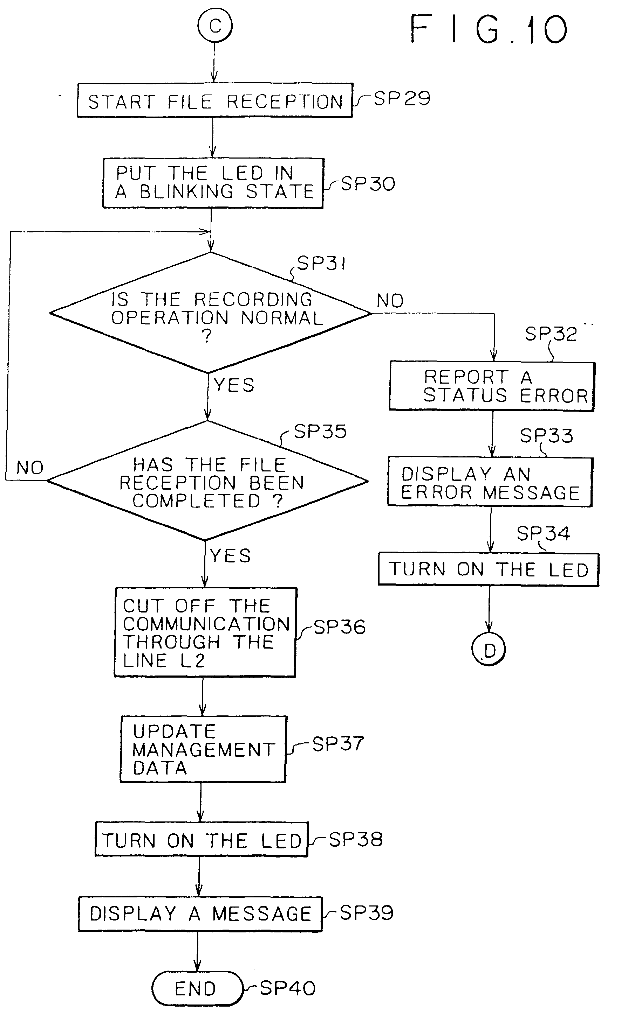

Figs. 9 and 10 show a flowchart representing the procedure of processing inverse to the processing shown in Figs. 7 and 8. That is to say, the processing represented by the flowchart shown in Figs 9 and 10 is carried out to handle a call transmitted by a communication partner to indicate an intention of the partner to transmit a tile by way of the telephone line L2. As shown in Fig. 9, the flowchart begins with a step SP21 followed by a step SP22 at which the controller 51 carries out processing to connect the telephone line L2 through the modem 55 in response to the incoming call. The flow of the procedure then goes on to a step SP23 at which the controller 51 sets a transmission speed and other parameters in the modem 55 in accordance with data exchanged with the telephone of the communication partner in processing known as initialization.

Then, the flow of the procedure goes on to a step SP24 at which the controller 51 makes a judgment as to whether the IC card 3 has been mounted. If the IC card 3 has not been mounted yet, the flow of the procedure proceeds to a step SP25 at which the controller 51 displays a message stating that the IC card 3 has not been mounted yet on the liquid-crystal display panel 44. Then, the flow of the procedure goes back to the step SP24.

If the IC card 3 has been mounted correctly, on the other hand, the flow of the procedure proceeds from the step SP24 to a step SP26 at which the controller 51 exchanges information on a file to be transmitted by the communication partner after notifying the communication partner that an IC card 3 has been mounted by transmitting status data. To put in detail, the controller 51 receives the amount of data stored in a file to be transmitted from the communication partner, and transmits the size of a recording area left in the IC card 3 to the communication partner.

The flow of the procedure then goes on to a step SP27 at which the controller 51 compares the amount of data stored in a file to be received from the communication partner with the size of a recording area left in the IC card 3 to make a judgment as to whether the data received from the communication partner can all be accommodated in the IC card 3. If the outcome of the judgment indicates that the data received from the communication partner can not all be accommodated in the IC card 3, the flow of the procedure goes on to a step SP28 at which the controller 51 displays a message stating that the IC card 3 does not give a sufficient recording area on the liquid-crystal display panel 44. Then, the flow of the procedure goes back to the step SP24.

If the outcome of the judgment made at the step SP27 indicates that the data received from the communication partner can all be accommodated in the IC card 3, on the other hand, the flow of the procedure goes on to a step SP29 at which the controller 51 starts reception of the file. That is to say, the controller 51 sequentially stores video and audio data received through the modem 55 onto the IC card 3. Then, the flow of the procedure goes on to a step SP30 at which the controller 51 changes the state of the light emitting diode 49A or 49B from turned-on to blinking.

Then, the flow of the procedure goes on to a step SP31 at which the controller 51 makes a judgment as to whether or not the file received from the communication partner has been stored into the IC card 3 normally. If data can not be received due to typically an abnormality wherein the IC card 6 has been pulled out from the telephone of the communication partner, the IC card 3 has been removed from the telephone 4 or the telephone line L2 has been cut off, for example, the outcome of the judgment is a negation causing the flow of the procedure to go on to a step SP32 at which the controller 51 transmits a status error indicating a file storing failure to the communication partner.

The flow of the procedure then goes on to a step SP33 at which the controller 51 displays a message indicating that the file could not be stored normally on the liquid-crystal display panel 44. The flow of the procedure then goes on to a step SP34 at which the controller 51 changes the state of the light emitting diode 49A or 49B from blinking to turned-on. Then, the flow of the procedure goes back to the step SP27 at which the controller 51 waits for the abnormality to be fixed. At that time, the controller 51 can complete the sequence of operations in accordance with an operation carried out by the user if necessary. In this way, the reception of the file can be halted in the event of an abnormality if desired by the user.

If the outcome of the judgment made at the step SP31 indicates that data can be received normally, on the other hand, the flow of the procedure goes on to a step SP35 at which the controller 51 makes a judgment as to whether or not the transmission of the file has been completed. The formation of the judgment is based on a notice received from the communication partner. If the transmission of the file has not been completed yet, the flow of the procedure goes back to the step SP31. In this way, the controller 51 carries out the pieces of processing of the steps SP31 - SP35 - SP31 repeatedly to record the file onto the IC card 3 till the transmission of the file is completed. As the transmission is finished, the flow of the procedure proceeds from the step SP35 to a step SP36 at which the telephone line L2 is cut off.

After the controller 51 cuts off the telephone line L2 at the step SP36, the flow of the procedure goes on to a step SP37 at which the management data of the IC card 3 is updated to reflect the new file recorded on the IC card 3. Then, the flow of the procedure goes on to a step SP38 at which the controller 51 changes the state of the light emitting diode 49A or 49B from blinking to turned-on. The flow of the procedure then continues to a step SP39 at which the controller 51 displays a message stating that the file has been correctly recorded onto the IC card 3 on the liquid-crystal display panel 44. Finally, the flow of the procedure continues to a step SP40 at which the processing is ended.

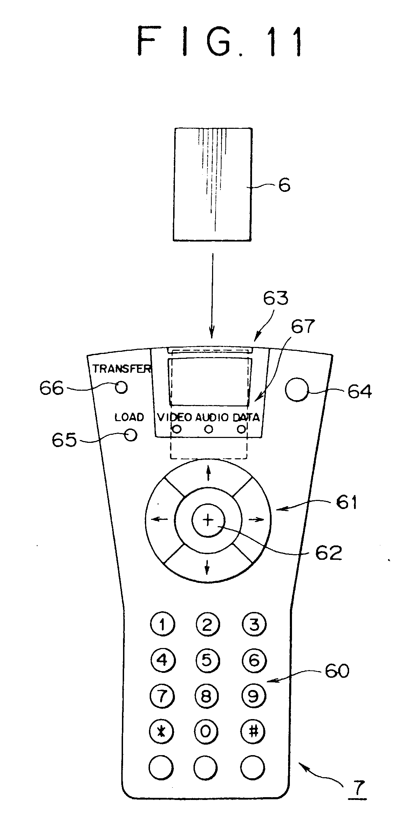

Fig. 11 shows a top view of a remote commander 7 for controlling the television receiver 9 from a remote location by using an infrared beam. With the IC card 6 mounted on the remote commander 7, the remote commander 7 is capable of displaying a still picture recorded on the IC card 6 on the television receiver 9 and outputting a sound recorded on the IC card 6 to the television receiver 9.

As shown in Fig. 11, the remote commander 7 typically has a rectangular top view with a widened end. On the base side, numeric operators 60 and the like are provided. The remote commander 7 further has a ring-shaped operator 61 to be operated to move typically a cursor on the screen of the television receiver 9 vertically and horizontally. A determining operator 62 is placed at the center of the operator 61. The remote commander 7 also has a slot 63 made on an end thereof and used for inserting the IC card 6. A power-supply switch 64, an operator 65 to be operated to load management data from the IC card 6 and an operator 66 to be operated to transmit data from the IC card 6 are provided on the two sides of the slot 63 on the remote commander 7.

A display unit 67 for displaying details of data recorded on the IC card 6 is provided beside the operator 61 on the remote commander 7. It should be noted that details of data indicate the type of a file recorded on the IC card 6. The type of a file is detected from loaded management data. By turning on light emitting diodes, it is possible to create a video display showing a still picture, an audio display showing a sound and a data display showing various kinds of information such as a control program.

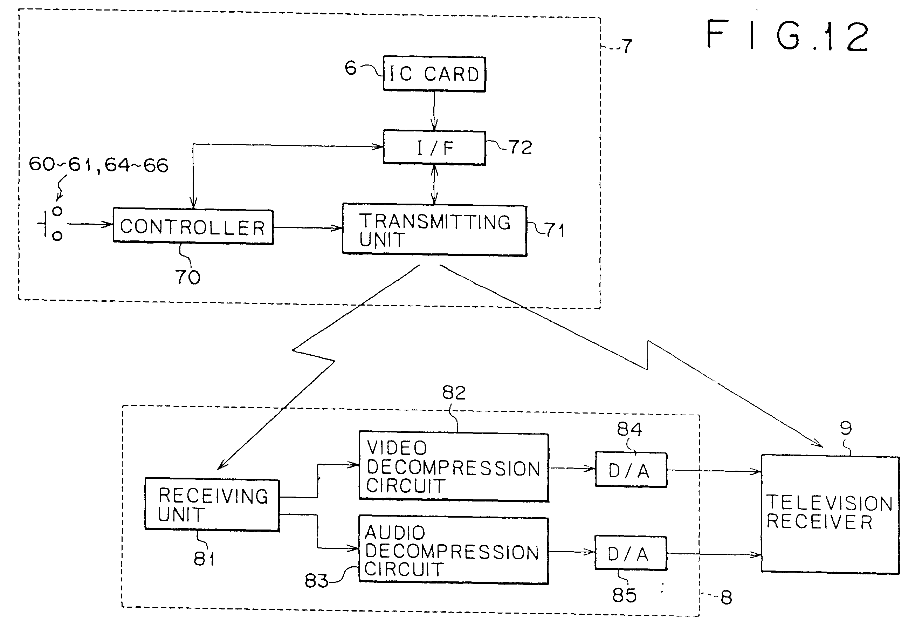

Fig. 12 is a block diagram showing the remote commander 7, the receiving apparatus 8 and the television receiver 9. As shown in the figure, the remote commander 7 has a controller 70 for remotely controlling the television receiver 9 in accordance with operations carried out on the operators 60, 61 and 64 to 66.

To put it in detail, in the remote commander 7, the controller 70 is implemented by a microcomputer which controls the operation of a transmitting unit 71 in accordance with operations carried out on the operators 60, 61 and 64 to 66. The transmitting unit 71 outputs a remote control signal to the television receiver 9.

The remote commander 7 detects a mounted IC card 6 through an interface (I/F) 72. When the load operator 65 is operated with the IC card 6 mounted, the interface 72 is controlled to load management data from the IC card 6. As the operation to load the management data is completed, light emitting diodes 67 allocated to a video, audio or data display are turned on. The display is selected in accordance with the type of a file included in the management data. When the user operates the transmission operator 66 in this state, the remote commander 7 controls the interface 72 to sequentially transfer pieces of file data recorded on the IC card 6 to the transmission unit 71 which then transmits the data to the receiving apparatus 8.

Much like the interface 53 employed in the telephone 4 or 5 described above, the interface 72 detects an IC card 6 being mounted on or dismounted from the remote commander 7 and reports such an event to the controller 70. Controlled by the controller 70, the interface 72 loads management data from the IC card 6 and informs the controller 70 that the management data has been loaded. The interface 72 further loads pieces of file data sequentially from the IC card 6 and transfers the data to the transmission unit 71.

Controlled by the controller 70, the transmission unit 71 outputs an infrared beam as a remote control signal for remotely controlling the television receiver 9. The transmission unit 71 modulates the infrared beam by using the data of the IC card 6 received from the interface 72 in accordance with a predetermined modulation system under control also executed by the controller 70.

As described above, the remote commander 7 further remotely controls the television receiver 9 and transmits video and audio data recorded on the IC card 6 to the receiving apparatus 8.

In the receiving apparatus 8, a receiving unit 81 receives a remote control signal from the remote commander 7 and outputs video and audio data included in the signal to a video decompression circuit 82 and an audio decompression circuit 83 respectively. The video decompression circuit 82 decompresses the video data and the audio decompression unit 83 decompresses the audio data. At that time, the audio decompression unit 83 corrects the timing of the audio data to match the timing of the video data output by the video decompression circuit 82.

Digital/analog (D/A) conversion circuits 84 and 85 converts the video and audio data output by the video and audio decompression circuits 82 and 83 respectively into analog signals which are then supplied to the television receiver 9.

In the still picture transmission system 1 with the configuration described above, an image-pickup result is compressed in accordance with the JPEG system and recorded onto the IC card 3 by an operation which is carried out on the operators provided on the electronic still camera 2 after the IC card 3 has been mounted on the electronic still camera 2. At the same time, a sound generated by the image-pickup object and input by the microphone 29 is also subjected to data compression before being recorded onto the IC card 3. At that time, the video and audio data of the still picture are recorded onto the IC card 3 with the video data associated with the audio data and with relevant information such as the image-pickup date and time, the image-pickup location and the type of the file cataloged in the management data.

In the still picture transmission system 1, an IC card 3 containing a still picture and a sound is mounted on telephone 4 and the contents of the IC card 3 are transmitted to a remote destination. With the telephone line L1 connected to a communication partner at the remote location through an ordinary operation, the user of the telephone 4 is allowed to orally tell the communication partner that a file will be transmitted and request the partner to set an IC card 6 on the telephone 5.

When a predetermined operator 47 is operated in this state, the other telephone line L2 is put in a connected state, allowing the contents of the IC card 3 to be transmitted to the IC card 6 of the communication partner. In the mean time, the telephone line L1 is maintained in a state allowing a voice conversation. Thus, while data of the IC card 3 is being transmitted to the IC card 6, the voice conversation is under way. As a result, an image-pickup result can be transmitted with ease in comparison with the conventional system.

In addition, the telephone 4 also examines whether the IC card 3 has been mounted correctly. If the IC card 3 is not mounted correctly, a message is displayed to draw the user's attention. Thus, a user not well familiar with operations of the telephone 4 is capable of transmitting data with a high degree of reliability.

In addition, prior to transmission of data of a file, information on the file to be transmitted from the IC card 3 is exchanged to make sure that the IC card 6 includes a recording area large enough for accommodating the data of the file. If the IC card 6 does not include a recording area large enough for accommodating the data of the file, similarly, a message is displayed to draw the user's attention. As a result, the telephone can be used more in a way desired by the user.

Moreover, when the IC card 3 or 6 is mounted on the telephone 4 or 5, the light emitting diode 49A or 49B is turned on and, during transmission of data, the light emitting diode 49A or 49B is blinking. Thus, a series of operations can be verified visually. As a result, the telephone can be used more in a way desired by the user.

In the telephone 5, data of the IC card 3 received from the telephone 4 in this way is recorded onto the IC card 6 and the management data in the IC card 6 is updated to reflect the newly recorded data.

When the IC card 6 containing the newly recorded data as described above is mounted on the remote commander 7 of Fig. 11 which is capable of remotely controlling the television receiver 9 as shown in Fig. 12, the file format of the data can be loaded and displayed on the display unit 67 employed in the remote commander 7 by an operation carried out on the load operator 65. In accordance with the management data loaded at that time, the remote commander 7 sequentially loads pieces of video and audio data recorded on the IC card 6 and transmits them as an infrared beam to the television receiver 9 as requested through an operation carried out on the transmission operator 66.

In the still picture transmission system 1, the infrared beam is received by the reception apparatus 8 in which the video and audio data are each decompressed before being supplied to the television receiver 9. Thus, it is possible to provide a still picture transmission system 1 that is capable of handling a still picture with a high degree of freedom through the IC cards 3 and 6.

In the configuration described above, data recorded on an IC card mounted on a telephone such as a still picture can be transmitted with ease to another IC card mounted on another telephone concurrently with and at the same time as a voice conversation between the telephones.

In addition, the telephone provides an indicator showing that an IC card has been mounted correctly and that transmission of data is under way so that a series of operations can be verified visually and the telephone can be used more in a way desired by the user.

Moreover, data is transmitted only after a sufficient recording space is verified to exist in the IC card of the communication partner. Thus, while data of a still picture can be transmitted through such simple operations, desired data can be transmitted with a high degree of reliability by prevention of an accident such as deleting some of the data during the transmission.

In the embodiment described above, data of an IC card is transmitted through a data-transmission line allocated separately from a voice-conversation line. It should be noted, however, that implementations of the present invention are not limited to such a technique of transmission. Depending on the amount of data to be transmitted, the data can also be transmitted by a control channel using a digital line. In addition, a sound can be subjected to data transmission in digital-signal processing prior to transmission and data can be transmitted along with the sound by various kinds of multiplexing of the data with the sound.

In addition, in the embodiment described above, when an IC card is mounted, a light emitting diode is turned on and, while data is being transmitted, the light emitting diode is put in a blinking state. It is worth noting, however, that implementations of the present invention are not limited to such a light emitting diode. That is to say, a variety of display means can be used. For example, another light emitting diode can be turned on to indicate that transmission of data is under way.

Furthermore, in the embodiment described above, when data is transmitted, a light emitting diode is put in a blinking state to draw the user's attention so that the user will not remove the IC card from the telephone. It should be noted, however, that implementations of the present invention are not limited to such an indicator. For example, another lock mechanism can also be used to prevent the IC card from being pulled out from the telephone while data is being transmitted.

On the top of that, in the embodiment described above, video and audio data recorded on an IC card are transmitted. It is to be noted, however, that the scope of the present invention is not limited to such an application. For example, the present invention can also be used widely for transmitting various kinds of data such as text data.

## Claims

1. A telephone (4, 5) comprising:
an IC-card holding means (48A, 48B) for holding an IC card (3, 6) in such a way that said IC card (3, 6) can be mounted and dismounted with a high degree of freedom;
an audio communication means (41) for inputting and outputting an audio signal to allow an audio communication with a communication partner; and
a data transmission means for transmitting data recorded on said IC card (3, 6) to said communication partner concurrently with and at said same time as said audio communication carded out by said audio communication means (41).

2. A telephone (4, 5) according to claim 1 further comprising a display means (49A, 49B) for displaying status as to whether said IC card (3, 6) has been mounted or dismounted.

3. A telephone (4, 5) according to claim 1 or 2 further comprising a display means (49A, 49B) for indicating that data is being transmitted.

4. A telephone (4, 5) according to claim 1, 2 or 3, wherein data is transmitted only after a free recording area large enough for accommodating said data has been confirmed to exist in an IC card (3, 6) of said communication partner.

5. A telephone (4, 5) according to one of the claims 1 to 4, wherein data to be transmitted is data of a still picture.

6. A telephone (4, 5) comprising:
an IC-card holding means (48A, 48B) for holding an IC card (3, 6) in such a way that said IC card (3, 6) can be mounted and dismounted with a high degree of freedom;
an audio communication means (41) for inputting and outputting an audio signal to allow an audio communication with a communication partner; and
a data processing means for recording data received from said communication partner onto said IC card (3, 6) concurrently with and at said same time as said audio communication carried out by said audio communication means (41).

7. A telephone (4, 5) according to claim 6, further comprising a display means (49A, 49B) for displaying status as to whether said IC card (3, 6) has been mounted or dismounted.

8. A telephone (4, 5) according to claim 6 or 7, further comprising a display means (49A, 49B) for indicating that data is being transmitted.

9. A telephone (4, 5) according to claim 6, 7 or 8, wherein data is transmitted by said communication partner only after a free recording area large enough for accommodating said data has been confirmed to exist in said IC card (3, 6).

10. A telephone (4, 5) according to one of the claims 6 to 9, wherein data to be transmitted is data of a still picture.

11. A data transmission method for transmitting data recorded on an IC card (3, 6) held in such a way that said IC card (3, 6) can be mounted and dismounted with a high degree of freedom to a communication partner while exchanging an audio signal with said communication partner.

12. A data transmission method for recording data received from a communication partner onto an IC card (3, 6) held in such a way that said IC card can be mounted and dismounted with a high degree of freedom while exchanging an audio signal with said communication partner.
